# DEMANDE DE BREVET EUROPEEN

(11) **EP 1 652 827 A1**
(43) Date de publication de la demande: **03.05.2006**
(21) Numéro de dépôt: 04292557.8
(22) Date de dépôt: 27.10.2004
(51) Int. Cl.: C04B 28/02, C04B 26/32, B01J 35/00

(54) **Système dépolluant pour espaces confinés**

(71) Demandeur: Eurovia, 92500 Rueil-Malmaison (FR)
(72) Inventeur: Toulan, Emmanuel, 75014 Paris (FR); Maze, Michel, 33000 Bordeaux (FR); Rousseau, Pascal, 33000 Bordeaux (FR)
(74) Mandataire: Texier, Christian

(57) **Abrégé**

La présente invention concerne un système dépolluant comprenant l'association, dans un espace confiné :
d'une source lumineuse capable de produire un éclairement d'une puissance supérieure à 50 Lux sur la surface de parements et/ou de sols, et
d'une composition de revêtement dépolluante desdits parements et/ou dedits sols comprenant :
   un photocatalyseur comprenant des particules de TiO₂,
   un liant hydraulique choisi parmi les ciments et les composés siliconés.

L'invention concerne aussi l'utilisation d'une source lumineuse capable de produire un éclairement d'une puissance supérieure à 50 Lux sur la surface de parements et/ou de sols pour activer un photocatalyseur contenant des particules de TiO₂ contenues dans lesdits parements et/ou lesdits sols d'espaces confinés.

## Description

La présente invention concerne l'association, dans un espace confiné, de certaines sources lumineuses et d'une composition de revêtement dépolluante des parements et/ou des sols.

Les émissions d'oxydes d'azote (NO₂ et NO) apparaissent lors des combustions à hautes températures de combustibles fossiles tels que les charbons, le fuel, le pétrole, les essences, ... Le secteur des transports est responsable de près de 60 % des émissions d'oxydes d'azote. La pollution de l'air ainsi engendrée est devenue ces dernières années un problème majeur, notamment avec l'augmentation considérable du nombre de véhicules circulant, en particulier dans les grandes agglomérations.

Les conséquences des rejets des oxydes d'azote se font sentir sur l'environnement. Ces oxydes participent aux pluies acides, à la formation de l'ozone troposphérique et interviennent dans la formation des oxydants photochimiques et par effet indirect dans l'accroissement de l'effet de serre.
Des effets sur la santé humaine ont également été mis en évidence. Les populations à risque sont les enfants, les personnes âgées, les asthmatiques, et les insuffisants respiratoires, qui sont particulièrement sensibles à cette pollution. Elle peut entraîner une altération des fonctions respiratoires, une hyperréactivité bronchique, et un accroissement de la sensibilité des bronches aux infections.

Une autre conséquence de la pollution par les oxydes d'azote en milieu urbain, est la dégradation des édifices de construction. Il est ainsi devenu très difficile voire impossible de conserver aux revêtements muraux extérieurs et intérieurs leur aspect d'origine. Des particules se déposent sur la surface des murs participant à la formation d'une couleur foncée presque noire, et les pluies acides exercent un effet délétère sur la pierre. L'entretien et la maintenance des édifices représentent donc un coût économique de plus en plus lourd à supporter pour les propriétaires et/ou pour les collectivités locales.

Face à tous ces problèmes, une surveillance accrue sur les quantités d'oxydes d'azote ainsi que des seuils d'alerte ont été mis en place. Le seuil horaire pour la protection de la santé humaine en ce qui concerne le dioxyde d'azote a été fixé à 100 ppb (200 µg/m³) (directive 1999/30/CE du conseil du 22 avril 1999).

Diverses solutions ont été proposées, notamment dans le but de protéger les surfaces murales. La plus répandue consiste à appliquer un produit hydrophobe à base de silicone permettant d'éviter aux eaux de pluies d'adhérer et de pénétrer dans les revêtements. Ce type de produit est en outre stable en milieu alcalin, et à la lumière. Dans le but de protéger les revêtements contre les effets des polluants de type oxydes d'azote, mais aussi dans le but d'en diminuer la quantité, les brevets EP-0 633 064 et EP-0 786 283 proposent l'incorporation dans les compositions de ciment, d'un photocatalyseur de type dioxyde de titane (TiO2). Ce catalyseur permet d'oxyder, et donc de neutraliser les substances polluantes contenues dans l'air. Cette technologie a été mise en oeuvre pour réaliser des pavés « auto nettoyants » pouvant être appliqués aussi bien sur les routes que sur des trottoirs, mais également adaptables à une application sur des murs.

Ces diverses techniques sont applicables en extérieur, mais n'ont jamais été utilisées pour diminuer la quantité d'oxydes d'azotes dans des espaces confinés et/ou fermés.

Par exemple dans le cas de parkings souterrains, le passage incessant des véhicules, ainsi que l'absence de renouvellement de l'air font que le taux d'oxyde d'azote contenu dans l'air atteint des concentrations très importantes qui dépassent largement les seuils horaires fixés. D'autre part l'esthétique des revêtements des parements peut aussi souffrir, comme c'est le cas en extérieur, d'un noircissement qui n'est pas uniforme puisque la concentration en polluants varie énormément en fonction des zones. En effet des études ont mis en évidence une concentration élevée en oxydes d'azote sur l'ensemble du parking et des pics de concentration en plusieurs endroits : au niveau des barrières automatiques de péage, en fin des rampes d'entrée, et au niveau des rampes de sortie. D'autre part les systèmes de ventilations classiquement utilisés sont couplés à des détecteurs d'oxydes de carbones (CO, CO₂ qui ne prennent pas en compte les oxydes d'azote. Les concentrations de ces oxydes s'en trouvent alors augmentées de façon considérable avec un phénomène d'accumulation.

Le même phénomène a été observé dans les tunnels pour lesquels, mis à part les zones d'entrée et de sortie, les flux et les mouvements d'air sont peu importants, provoquant ainsi une accumulation des oxydes d'azote pour atteindre des concentrations moyennes largement supérieures aux seuils légaux.

Enfin les extracteurs d'air des édifices tels que les parkings ou les tunnels rejettent l'air à l'extérieur. Des mesures au niveau des sorties de ces extracteurs ont mis en évidence la présence d'oxydes d'azote. Les seuils légaux sont largement dépassés en ces endroits. Le rejet de cet air pollué dans l'atmosphère peut poser des problèmes sur l'environnement et sur la santé des riverains.

Les techniques de dépollution évoquées précédemment et utilisant des photocatalyseurs comprenant des particules de TiO₂ font appel à des réactions de photo-activation. Elles ne peuvent donc être directement transposées à des systèmes confinés tels que les parkings, les tunnels, ou les conduits d'extractions d'air de ces mêmes édifices, qui reçoivent en général peu ou pas de lumière. Ceci est d'autant plus vrai que la réglementation impose l'utilisation de certains types de lumière dans lesdits espaces confinés. Ainsi, le manque de ventilation efficace entraîne un phénomène d'accumulation et les concentrations en oxydes d'azote peuvent atteindre des valeurs allant de 1000 ppb à 2000 ppb, avec des pics nettement supérieurs pour des zones précises telles que les barrières de péage des parkings mentionnées ci-dessus. Il est donc d'un grand intérêt de pouvoir éliminer ces polluants dans un temps relativement court, de façon à éviter le phénomène d'accumulation, et de refaire passer rapidement le taux d'oxydes d'azote en dessous du seuil légal fixé à 100 ppb dans ces espaces confinés où les flux d'air sont pratiquement inexistants.

La Demanderesse a trouvé de façon surprenante que ces problèmes pouvaient être résolus par l'utilisation de certaines sources lumineuses en combinaison avec une composition de revêtement des parements et/ou des sols comprenant des particules de photocatalyseurs capables d'éliminer les substances polluantes.

La présente invention a donc pour objet un système dépolluant comprenant l'association, dans un espace confiné :
- d'une source lumineuse capable de produire un éclairement d'une puissance supérieure à 50 Lux sur la surface de parements et/ou de sols, et
- d'une composition de revêtement dépolluante desdits parements et/ou desdits sols comprenant :
   - un photocatalyseur comprenant des particules de TiO₂,
   - un liant hydraulique choisi parmi les ciments et les composés siliconés.

Par espace confiné, au sens de la présente invention, on entend tout endroit où les flux d'air naturel sont faibles voire inexistants et où les gaz peuvent stagner pendant un temps suffisamment long pour provoquer un phénomène d'accumulation. On peut citer par exemple les tunnels, les couvertures de rocades, les parkings, les rampes d'entrée et de sortie de ces parkings. Dans un autre aspect de l'invention, on entend par espace confiné un conduit d'extraction desdits espaces confinés où les débits d'air peuvent être importants par ventilation mécanique contrôlée.

Préférentiellement, pour la mise en oeuvre de la présente invention, la source lumineuse produit un éclairement comprise entre 50 et 300 Lux et plus particulièrement -entre 100 et 150 Lux sur les revêtements dépolluants avec une lumière dont une partie du spectre est émis entre 350 et 400 nm tout en respectant les seuils imposés des réglementations en vigueur (éclairage s'approchant de la lumière du jour).

De façon avantageuse, la source lumineuse utilisée dans le cadre de la présente invention est une lampe. Les lampes couramment utilisées dans les tunnels, parkings fournissent les caractéristiques recherchées pour l'activation du phénomène de dépollution. Cependant, il convient de choisir les différentes lampes (spectre d'émission, puissance, éclairement) en fonction de l'éclairement admissible et de l'efficacité dépolluante recherchée.
Les lampes utilisées sont préférentiellement des lampes à incandescence, des lampes à induction, et des lampes fluorescentes.

La composition de revêtement utilisée dans la présente invention contient généralement entre 0,5 % et 30 % de particules de TiO₂ en poids par rapport au poids total de la composition. Préférentiellement cette quantité de TiO₂ est comprise entre 5 % et 15 % en poids par rapport au poids total de la composition.

Les particules de TiO₂ peuvent exister sous plusieurs formes cristallines. Les deux formes principales sont la forme rutile, et la forme anatase. La forme rutile est la plus stable, et la forme anatase est convertie en rutile à température ambiante avec une vitesse extrêmement lente. Cette vitesse de conversion augmente avec la température. Par contre la forme rutile ne peut se convertir en anatase. Les particules de TiO₂ utilisées dans les compositions selon l'invention seront préférentiellement sous forme anatase. La proportion de TiO₂ sous forme anatase sera ainsi généralement d'au moins 5 % en poids, préférentiellement d'au moins 25 % en poids, plus particulièrement d'au moins 50 % en poids et de façon tout à fait particulière d'au moins 70 % en poids par rapport au poids total de TiO₂ présent dans les compositions.

Dans un aspect de l'invention, le liant hydraulique présent dans les compositions est un ciment. Les ciments convenant à la mise en oeuvre de l'invention sont en particulier choisis parmi les ciments Portland, les ciments Portland composés contenant notamment des laitiers, des cendres volantes ou des fumées de silice, les ciments au laitier, les ciments à maçonner, les ciments prompt naturels, les ciments alumineux fondus et les ciments blancs.

Dans un aspect avantageux de l'invention, on utilise des ciments Portland à haute teneur en alumine, tels que les ciments alumineux fondus.

Dans un aspect préféré de l'invention, lorsque le liant hydraulique est choisi parmi les ciments, une partie du ciment est remplacée par du pouzzolane. Par exemple la quantité de pouzzolane comprise dans la composition selon l'invention peut aller jusqu'à 40 % en poids par rapport au poids total de la composition. De manière préférentielle, la quantité de pouzzolane peut aller jusqu'à 25 %, et plus particulièrement jusqu'à 10% en poids par rapport au poids total de la composition.

Dans un autre aspect de l'invention, les compositions telles que définies ci-dessus contiennent comme le liant hydraulique un composé siliconé notamment choisi parmi les silices colloïdales et les polyorganosiloxanes.

La quantité totale de liant hydraulique présent dans les compositions de l'invention est comprise entre 10 % et 50 % en poids par rapport au poids total de la composition, et préférentiellement entre 13 % et 30 % en poids par rapport au poids total de la composition.

Dans un autre aspect de l'invention, la composition de revêtement comprend en outre, du sable, en quantité allant jusqu'à 70 % en poids par rapport au poids total de la composition. De façon particulière, la quantité de sable ne dépassera pas 50 % en poids, et préférentiellement ne dépassera pas 30 % en poids par rapport au poids total de la composition.

Dans un autre aspect de l'invention, il est possible d'armer, par exemple, avec un treillis métallique afin de renforcer la structure du revêtement dépolluant.

Un autre aspect de l'invention concerne un système pour lequel la composition de revêtement contient en outre un matériau acoustique. Au sens de la présente invention, par matériau acoustique on entend tout matériau susceptible d'absorber les bruits, et notamment les bruits engendrés au niveau des axes routiers. Dans un aspect particulièrement intéressant de l'invention, le matériau acoustique est choisi parmi les copeaux de bois, les billes d'argile, et les billes de caoutchouc.

Les copeaux de bois proviennent avantageusement d'épicéa, de pins sylvestres, et de pins douglas. Le pourcentage d'écorce contenu dans les copeaux de bois n'excédera pas 3 %. La granulométrie moyenne sera préférentiellement comprise entre 3 mm et 6 mm.

Les billes d'argile seront par exemple des billes d'argile expansé dont le diamètre moyen sera de préférence compris entre 2 mm et 30 mm.

La quantité de matériau acoustique présent dans la composition de l'invention sera en général comprise entre 20 % et 60 %, et de préférence entre 25 % et 50 % en poids par rapport au poids total de la composition.

Sauf indication contraire, les quantités indiquées ci-dessus se réfèrent au poids total de la composition incluant l'eau nécessaire au mélange de tous les constituants. L'homme du métier adaptera la quantité d'eau de façon classique en fonction des autres ingrédients et de la composition désirée.

De façon classique, les compositions du système selon la présente invention pourront contenir un ou plusieurs oxydes métalliques de coloration. On peut citer à titre d'exemple les oxydes de fer, de chrome, de cobalt, d'aluminium, ou les oxydes mixtes de ces métaux. Les couleurs susceptibles d'être obtenues peuvent être choisies parmi les jaunes, les verts, les bleus, les bruns, les rouges. La composition sera en outre exempte de tout colorant organique.

Dans le but d'améliorer les propriétés de tenue des compositions des systèmes de la présente invention, on pourra ajouter auxdites compositions des additifs organiques, pour autant qu'ils n'engendrent pas d'interactions avec les particules de TiO₂ constituant le photocatalyseur. A titre d'exemple, et de façon non limitative, on peut citer les fluidifiants tels que les résines mélamine, les hydrofuges, les agents régulateurs de la viscosité tels que les éthers de cellulose, les plastifiants tels que les poudres polymériques et les polymères acryliques, les agents épaississants tels que l'amidon modifié, les tensioactifs anioniques tels que les esters sulfuriques à longue chaîne, les agents empêchant la formation de bulles d'air, les fibres organiques et inorganiques.

De manière à faciliter l'entretien et le nettoyage des parements constituants du système selon l'invention, les compositions de parements comprises dans ledit système peuvent être recouvertes d'un revêtement « anti-graffiti » qui permettra d'enlever facilement les traces de peinture indésirables. On peut citer en particulier les revêtements micro-poreux à base de résines polyesters hydroxylées tels que le produit ULTIMA AG® commercialisé par la société STOP-GRAFF ou à base de polysaccharides végétaux tels que le PSS 20® commercialisé par la société PSS Interservice, et les émulsions aqueuses à base de cires végétales renforcées telles que le produit STG 3502® commercialisé par la société STOP-GRAFF.

Les systèmes de la présente invention comprennent des compositions de revêtement dépolluantes. A ce titre lesdites compositions sont destinées à être appliquées sur tout type de support rigide classiquement employé par l'homme du métier. Dans un aspect de l'invention le support est constitué par un béton.

Par béton au sens de l'invention, on entend tout type de béton couramment utilisé par l'homme du métier. Il peut être en particulier constitué d'un ciment mélangé avec un agrégat inerte par exemple choisi parmi le sable, les pierres naturelles, les gravats, les pierres écrasées.

Dans un forme préférée de l'invention, la composition de revêtement dépolluante comprend un photocatalyseur contenant des particules de TiO₂, un liant hydraulique choisi parmi les ciments, au moins un matériau acoustique tel que défini précédemment, préférentiellement des copeaux de bois ou des billes d'argile, et éventuellement du sable. Cette composition est éventuellement appliquée sur un support constitué par un béton, en particulier sous forme de dalles dont la dimension est préférentiellement comprise entre 0.125 m² et 0.25 m². Les dalles sont alors destinées à être appliquées directement par des chevilles chimiques sur les parements et/ou les sols à traiter.
Dans une autre forme d'exécution de l'invention, la composition de revêtement dépolluante comprend un photocatalyseur contenant des particules dé TiO₂, un liant hydraulique choisi parmi les ciments, du sable, et éventuellement de l'eau. Cette composition est destinée à être appliquée par projection sur la surface des parements et/ou des sols à traiter, après préparation de ladite surface par exemple par bouchardage, ou par application d'un enduit de résine.

Un autre aspect de l'invention concerne le traitement des gaz pollués dans des espaces confinés tels que décrit précédemment et plus particulièrement dans les extracteurs d'air pour lesquels l'air circule à une vitesse non négligeable, par exemple de l'ordre de 4 m/s.

Le principe de dépollution consiste alors à exposer l'air pollué à un maximum de surfaces de revêtements dépolluants éclairées par une quantité suffisante d'ultraviolet tout en minimisant les pertes de charges du système. L'invention met en oeuvre des plaques, traitées au TiO₂ qui sont disposées parallèlement au sens de déplacement de l'air à dépolluer. Les dimensions de ces plaques sont déterminées à la fois par les contraintes d'éclairement du dispositif et de l'adaptabilité du dispositif aux sites existants. L'ensemble est disposé dans un caisson permettant à la fois de canaliser le flux d'air, de maintenir l'assemblage des différents éléments (plaques et lampes) et de confiner le rayonnement ultraviolet.

Dans cet aspect, l'invention concerne donc un système dépolluant comprenant l'association dans un extracteur d'air d'espaces confinés :
- d'une source lumineuse capable de produire un fort niveau en ultra violet, et
- d'une composition de revêtement dépolluante appliquée sur des plaques support et comprenant :
   - un photocatalyseur comprenant des particules de TiO₂
   - un liant hydraulique choisi parmi les ciments et les composés siliconés.

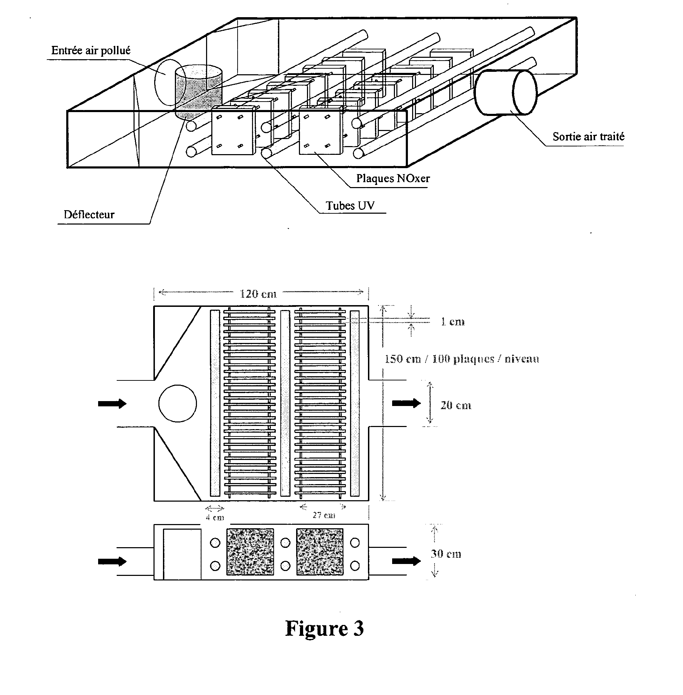

Préférentiellement, l'interstice entre les plaques est compris entre 5 mm et 50 mm, et plus particulièrement entre 8 et 20 mm permettant de garder un bon compromis entre les pertes de charge, le niveau d'éclairement et les surfaces de traitement. L'éclairage par une source lumineuse particulière permet l'activation optimale du procédé afin de rendre compatible la vitesse du gaz à traiter et le temps de contact entre surface et polluant. Préférentiellement, la source lumineuse est composée de lampes à fort niveau en ultra violet (tube fluorescent à rayonnement ultraviolet) agencées de manière à éclairer de façon optimale le revêtement dépolluant. Elles sont disposées perpendiculairement aux plaques, de manière régulière afin d'homogénéiser le flux lumineux reçu par celles-ci.
Le dispositif est schématisé à la figure 3.

L'invention concerne également l'utilisation d'une source lumineuse capable de produire un éclairement supérieur à 50 Lux sur la surface de parements et/ou de sols, pour activer un photocatalyseur contenant des particules de TiO₂ contenues dans les parements et/ou les sols d'espaces confinés, notamment lorsqu'ils sont soumis à l'action de polluants. Préférentiellement la source lumineuse sera choisie parmi les lampes à incandescence, les lampes à inductions, et les lampes fluorescentes.

Les exemples suivants illustrent l'invention sans présenter aucun caractère limitatif.

### Exemple : Mise en évidence de l'élimination des oxydes d'azote

Les tests menés ont été réalisés en laboratoire sur un dispositif expérimental qui se présente sous la forme d'un caisson en verre. Un air à teneur connue en oxyde d'azote est introduit et homogénéisé par un ventilateur de faible puissance. Des plaques d'essais recouvertes des compositions dépolluantes selon la présente invention sont placées à l'intérieur sur les parois. Une source lumineuse est placée au dessus du caisson, et la concentration en oxyde d'azote est analysée en ligne. Les mesures sont effectuées à l'aide d'un analyseur d'oxydes d'azote par chimiluminescence.

Les paramètres expérimentaux sont les suivants :

| | |
|---|---|
| Largeur du caisson | 90 cm |
| Hauteur du caisson | 90 cm |
| Hauteur des plaques d'essais | 80 cm |
| Largeur des plaques d'essais | 80 cm |
| Espace entre les plaques d'essais | 70 cm |
| Teneur en oxyde d'azote de l'air | 800 ppb |

Dans un premier groupe d'expériences, le temps de destruction des oxydes d'azote est mesuré en fonction du type de source lumineuse utilisée et en comparaison avec la lumière naturelle du jour.

Les sources lumineuses sont des lampes dont les caractéristiques sont les suivantes :
- lampes fluorescentes tubulaires ou compactes
- lampes à incandescence
- lampes à sodium (haute et basse pression)

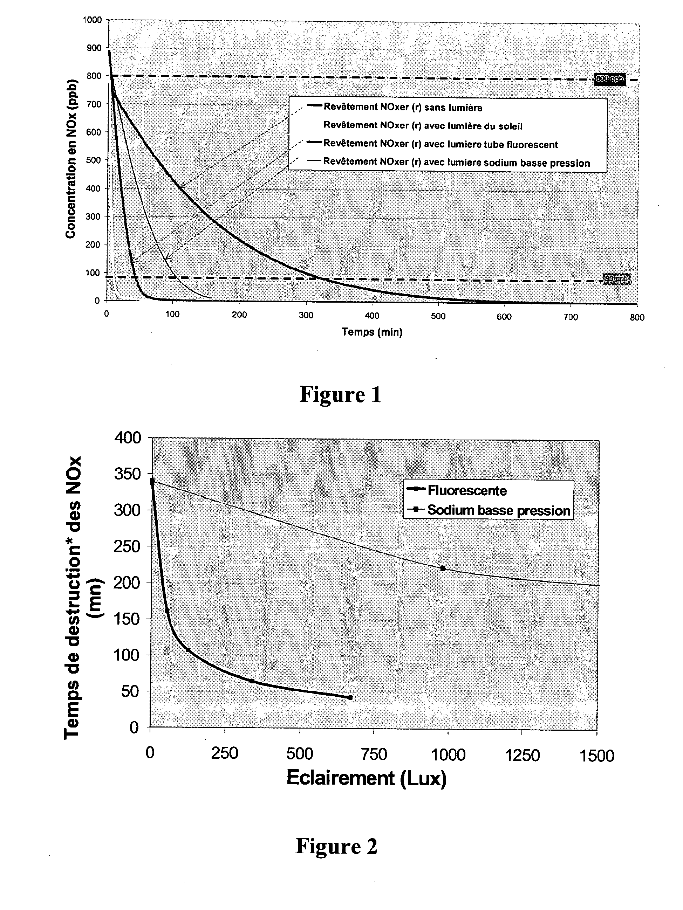

La relation entre éclairement (lux), efficacité de dépollution (temps à 90% d'élimination des NOₓ) et niveau d'ultraviolet produit par la source lumineuse (puissance de la longueur d'onde mesurée à 365 nm) fournit les caractéristiques optimales des lampes à retenir pour atteindre un certain niveau de dépollution.
Les résultats sont donnés dans le graphique de la figure 1. Ils montrent que les lampes fluorescentes présentent une courbe de destruction des oxydes d'azote voisine de celle obtenue avec la lumière naturelle et, que les lampes à sodium basse pression, utilisées typiquement dans la section courante des tunnels, présentent une efficacité similaire avec un niveau d'éclairement dans le visible très supérieur.

Dans un second groupe d'expériences, la source lumineuse (tube fluorescent, lumière blanche, 30 W) est placée directement sur la partie supérieure du caisson, puis à des hauteurs de 38 et 80 cm afin de modifier l'éclairement moyen sur les parois dépolluantes. Le temps de destruction des oxydes d'azote est alors mesuré. Les résultats sont donnés dans le tableau suivant :

| | | | | | |
|---|---|---|---|---|---|
| Eclairement moyen (Lux) | 0 | 54 | 127 | 340 | 670 |
| Temps de destruction (min) à 90% NOx | 340 | 161 | 107 | 65 | 43 |
| Niveau d'ultraviolet (mW/cm²) | 0 | 0.003 | 0.010 | 0.150 | 0.300 |

Les résultats sont donnés dans le graphique de la figure 2. Ils montrent qu'à partir d'un éclairement de 50 Lux la destruction des oxydes d'azotes s'effectue dans un temps acceptable, voire très bon lorsque l'éclairement est supérieur à 100 Lux.

## Revendications

1. Système dépolluant comprenant l'association, dans un espace confiné :
d'une source lumineuse capable de produire un éclairement d'une puissance supérieure à 50 Lux sur la surface de parements et/ou de sols, et
d'une composition de revêtement dépolluante desdits parements et/ou desdits
sols comprenant :
un photocatalyseur comprenant des particules de TiO₂
un liant hydraulique choisi parmi les ciments et les composés siliconés.

2. Système selon la revendication 1, **caractérisé en ce que** la source lumineuse produit un éclairement compris entre 50 et 300 Lux sur les revêtements dépolluants.

3. Système selon l'une des revendications 1 ou 2, **caractérisé en ce que** la source lumineuse produit un éclairement compris entre 100 et 150 Lux sur les revêtements dépolluants avec une lumière dont une partie du spectre est émis entre 350 et 400 nm.

4. Système selon l'une des revendications 1 à 3, **caractérisé en ce que** la source lumineuse est une lampe.

5. Système selon la revendication 4, **caractérisé en ce que** les lampes sont choisies parmi les lampes à incandescence, les lampes à induction, et les lampes fluorecentes.

6. Système selon l'une des revendications 1 à 5, **caractérisé en ce** la composition de revêtement contient une quantité de particules de TiO2 comprise entre 0,5 % et 30 % en poids par rapport au poids total de la composition et préférentiellement entre 5 % et 15 %.

7. Système selon l'une des revendications 1 à 6, **caractérisé en ce** le liant hydraulique de la composition de revêtement est un ciment.

8. Système selon la revendication 7, **caractérisé en ce que** une partie du ciment est remplacé par du pouzzolane.

9. Système selon l'une des revendications 1 à 6, **caractérisé en ce que** le composé siliconé de la composition de revêtement est choisi parmi les silices colloïdales et les polyorganosiloxanes.

10. Système selon l'une des revendications 1 à 9, **caractérisé en ce que** le liant hydraulique de la composition de revêtement est présent en une quantité comprise entre 10 % et 50 % en poids par rapport au poids total de la composition, et préférentiellement entre 13 % et 30 %.

11. Système selon l'une des revendications 1 à 10, **caractérisé en ce que** la composition de revêtement contient en outre du sable en une quantité allant jusqu'à 70 % en poids par rapport au poids total de la composition.

12. Système selon l'une des revendications 1 à 11, **caractérisé en ce que** la composition de revêtement contient en outre un matériau acoustique.

13. Système selon l'une des revendications 1 à 12, **caractérisé en ce que** la composition de revêtement contient en outre un ou plusieurs oxydes métalliques de coloration.

14. Système selon la revendication 1, **caractérisé en ce que** la composition de revêtement dépolluante comprend un photocatalyseur contenant des particules de TiO2, un liant hydraulique choisi parmi les ciments, au moins un matériau acoustique, préférentiellement des copeaux de bois ou des billes d'argile, et éventuellement du sable et **caractérisé en ce que** ladite composition est appliquée sur un support constitué par un béton sous forme de dalles destinées à être appliquées sur la surface des parements et/ou des sols à traiter.

15. Système selon la revendication 1, **caractérisé en ce que** la composition de revêtement dépolluante comprend un photocatalyseur contenant des particules de TiO2, un liant hydraulique choisi parmi les ciments, du sable, et éventuellement de l'eau, et **caractérisé en ce que** ladite composition est destinée à être appliquée par projection sur la surface des parements et/ou des sols à traiter.

16. Système selon l'une des revendications 1 à 15, **caractérisé en ce que** l'espace confiné est choisi parmi les parking, les tunnels, et/ou les conduites d'extraction d'air.

17. Système dépolluant comprenant l'association, dans un extracteur d'air d'espaces confinés :
- d'une source lumineuse capable dé produire un fort niveau en ultra-violet, et
- d'une composition de revêtement dépolluante appliquée sur des plaques support et comprenant
- un photocatalyseur comprenant des particules de TiO₂
- un liant hydraulique choisi parmi les ciments et les composés siliconés.

18. Utilisation d'une source lumineuse capable de produire un éclairement d'une puissance supérieure à 50 Lux sur la surface de parements et/ou de sols pour activer un photocatalyseur contenant des particules de TiO2 contenues dans lesdits parements et/ou lesdits sols d'espaces confinés.

19. Utilisation selon la revendication 18 **caractérisée en ce que** la source lumineuse est choisie parmi les lampes à incandescence, les lampes à inductions, et les lampes fluorescentes.

## Revendications modifiées

### Revendications modifiées conformément à la règle 86(2) CBE.

**1.** Dispositif dépolluant comprenant l'association, dans un espace confiné :
d'une source lumineuse capable de produire un éclairement d'une puissance supérieure à 50 Lux sur la surface de parements et/ou de sols, et
d'une composition de revêtement dépolluante desdits parements et/ou desdits sols comprenant :
un photocatalyseur comprenant des particules de TiO₂,
un liant hydraulique choisi parmi les ciments et les composés siliconés au moins un matériau absorbant acoustique.

**2.** Dispositif selon la revendication 1, **caractérisé en ce que** la source lumineuse produit un éclairement compris entre 50 et 300 Lux sur les revêtements dépolluants.

**3.** Dispositif selon l'une des revendications 1 ou 2, **caractérisé en ce que** la source lumineuse produit un éclairement compris entre 100 et 150 Lux sur les revêtements dépolluants avec une lumière dont une partie du spectre est émis entre 350 et 400 nm.

**4.** Dispositif selon l'une des revendications 1 à 3, **caractérisé en ce que** la source lumineuse est une lampe.

**5.** Dispositif selon la revendication 4, **caractérisé en ce que** les lampes sont choisies parmi les lampes à incandescence, les lampes à induction, et les lampes fluorescentes.

**6.** Dispositif selon l'une des revendications 1 à 5, **caractérisé en ce** la composition de revêtement contient une quantité de particules de Ti02 comprise entre 0,5 % et 30 % en poids par rapport au poids total de la composition et préférentiellement entre 5 % et 15 %.

**7.** Dispositif selon l'une des revendications 1 à 6, **caractérisé en ce** le liant hydraulique de la composition de revêtement est un ciment.

**8.** Dispositif selon la revendication 7, **caractérisé en ce que** une partie du ciment est remplacé par du pouzzolane.

**9.** Dispositif selon l'une des revendications 1 à 6, **caractérisé en ce que** le composé siliconé de la composition de revêtement est choisi parmi les silices colloïdales et les polyorganosiloxanes.

**10.** Dispositif selon l'une des revendications 1 à 9, **caractérisé en ce que** le liant hydraulique de la composition de revêtement est présent en une quantité comprise entre 10 % et 50 % en poids par rapport au poids total de la composition, et préférentiellement entre 13 % et 30 %.

**11.** Dispositif selon l'une des revendications 1 à 10, **caractérisé en ce que** la composition de revêtement contient en outre du sable en une quantité allant jusqu'à 70 % en poids par rapport au poids total de la composition.

**12.** Dispositif selon l'une des revendications 1 à 11, **caractérisé en ce que** la composition de revêtement contient en outre un ou plusieurs oxydes métalliques de coloration.

**13.** Dispositif selon la revendication 1, **caractérisé en ce que** la composition de revêtement dépolluante comprend un photocatalyseur contenant des particules de TiO2, un liant hydraulique choisi parmi les ciments, au moins un matériau acoustique, préférentiellement des copeaux de bois ou des billes d'argile, et éventuellement du sable et **caractérisé en ce que** ladite composition est appliquée sur un support constitué par un béton sous forme de dalles destinées à être appliquées sur la surface des parements et/ou des sols à traiter.

**14.** Dispositif selon la revendication 1, **caractérisé en ce que** la composition de revêtement dépolluante comprend un photocatalyseur contenant des particules de TiO2, un liant hydraulique choisi parmi les ciments, au moins un matériau absorbant acoustique, du sable, et éventuellement de l'eau, et **caractérisé en ce que** ladite composition est destinée à être appliquée par projection sur la surface des parements et/ou des sols à traiter.

**15.** Dispositif selon l'une des revendications 1 à 14, **caractérisé en ce que** l'espace confiné est choisi parmi les parking, les tunnels, et/ou les conduites d'extraction d'air.

**16.** Dispositif dépolluant comprenant l'association, dans un extracteur d'air d'espaces confinés :
- d'une source lumineuse capable de produire un fort niveau en ultra-violet, et
- d'une composition de revêtement dépolluante appliquée sur des plaques support et comprenant
- un photocatalyseur comprenant des particules de TiO₂
- un liant hydraulique choisi parmi les ciments et les composés siliconés.
- au moins un matériau absorbant acoustique.

**17.** Utilisation d'une source lumineuse, capable de produire un éclairement d'une puissance supérieure à 50 Lux sur la surface de parements et/ou de sols d'espaces confinés, pour activer un photocatalyseur comprenant des particules de Ti02 contenues dans la composition de revêtement desdits parements qui comprend un liant hydraulique choisi parmi les ciments et les composés siliconés et au moins un matériau absorbant acoustique.

**18.** Utilisation selon la revendication 17 **caractérisée en ce que** la source lumineuse est choisie parmi les lampes à incandescence, les lampes à inductions, et les lampes fluorescentes.
